# EUROPÄISCHE PATENTSCHRIFT

(11) **EP 3 584 118 B1**
(45) Veröffentlichungstag und Bekanntmachung des Hinweises auf die Patenterteilung: **19.01.2022**
(21) Anmeldenummer: 18178689.8
(22) Anmeldetag: 20.06.2018
(51) Int. Cl.: B60Q 1/14, B60Q 11/00

(54) **LEUCHTEINRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(43) Veröffentlichungstag der Anmeldung: 25.12.2019
(73) Patentinhaber: ZKW Group GmbH, 3250 Wieselburg (AT)
(72) Erfinder: Taudt, Lukas, 3250 Wieselburg (AT); Brauner, Nina, 3033 Altlengbach (AT); Schragl, Mathias, 3261 Zarnsdorf (AT); Längauer, Christoph, 3293 Lunz am See (AT); Höfler, Johann, 3250 Wieselburg (AT)
(74) Vertreter: Patentanwaltskanzlei Matschnig & Forsthuber OG

(56) Entgegenhaltungen:
- EP-A1- 3 059 121
- WO-A1-2014/032969
- DE-A1- 19 911 901
- DE-A1-102008 062 640
- DE-B3-102016 014 330

## Beschreibung

Die Erfindung betrifft eine Leuchteinrichtung für einen Kraftfahrzeugscheinwerfer.

Die Erfindung betrifft ferner einen Kraftfahrzeugscheinwerfer mit zumindest einer erfindungsgemäßen Leuchteinrichtung.

Im Stand der Technik sind Leuchteinrichtungen für einen Kraftfahrzeugscheinwerfer bekannt, die eine Mehrzahl von in Reihen angeordneten Lichtquellen offenbart, welche zur Erzeugung von zumindest einer Lichtverteilung in Fahrtrichtung vor dem Fahrzeug vorgesehen ist.

Der Begriff "Fahrtrichtung" bezeichnet in diesem Kontext die Richtung, in der sich ein angetriebenes Kraftfahrzeug wie konstruktiv vorgesehen bewegt. Ein technisch mögliches Rückwärtsfahren wird in diesem Zusammenhang nicht als Fahrtrichtung definiert.

Eine solche Anordnung von Lichtquellen wird üblicherweise als "Pixellicht" bezeichnet. Diese sind im Kraftfahrzeugbau gebräuchlich und dienen beispielsweise der Abbildung von blendfreiem Fernlicht, indem das Licht in der Regel von einer Mehrzahl von Lichtquellen, vorzugsweise Leuchtdioden, ausgestrahlt wird und von einer entsprechenden Mehrzahl von nebeneinander angeordneten Lichtführungen - auch Vorsatzoptik oder Primäroptik genannt - in Abstrahlrichtung bzw. Fahrtrichtung gebündelt wird.

Pixellichtscheinwerfer sind hinsichtlich der Lichtverteilung sehr flexibel, da für jedes Pixel die Beleuchtungsstärke individuell geregelt werden kann und beliebige Lichtverteilungen realisiert werden können.

Die konzentrierte Abstrahlung der Lichtführungen ist erwünscht, um beispielsweise gesetzliche Vorgaben bezüglich der Hell-Dunkel-Linie eines Kraftfahrzeugscheinwerfers zu erfüllen und/oder adaptive, flexible Ausblendszenarien umzusetzen.

Die Regelung der Beleuchtungsstärke erfolgt beispielsweise im Fall von LEDs standardmäßig durch Pulsweitenmodulation des Betriebsstromes, mit der eine im zeitlichen Mittel unterschiedliche Bestromung der Lichtquelle erreicht werden kann.

Üblicherweise werden dabei die LEDs im zentralen Bereich stärker bestromt als am Rand, weshalb das Maximum der Lichtverteilung in der Mitte liegt.

In derzeit bekannten Pixellicht-Modulen kommt eine zweidimensionale reihenförmige Anordnung der Lichtquellen, beispielsweise Leuchtdioden (LEDs), zur Anwendung, um eine segmentierte Abblend- und Fernlichtverteilung zu erzeugen. Hierzu werden die Lichtquellen in Gruppen unterteilt, wobei jede Gruppe eine Ansteuereinheit zugeordnet ist, welche die Lichtquellen der entsprechenden Gruppe einzeln ansteuert und deren Bestromung separat regeln kann.

Die Ansteuerdaten, welche umgesetzt werden sollen, werden zuerst einem Steuergerät zugeführt, welches mit den Ansteuereinheiten verbunden ist und diese entsprechend der Ansteuerdaten zur Umsetzung der zu erzeugenden Lichtverteilung ansteuert. Jedoch kann es im Falle eines Verbindungsabbruchs zwischen Steuergerät und zumindest einer Ansteuereinheit zu einer Umsetzung einer nicht gesetzeskonformen Lichtverteilung kommen.

Aus WO 2014/032969 A1 ist eine Leuchteinrichtung mit einer Notfallansteuerung bekannt.

Es ist eine Aufgabe der Erfindung eine verbesserte Leuchteinrichtung bereitzustellen, die im Falle eines Verbindungsabbruchs zwischen Steuergerät und zumindest einer Ansteuereinheit eine gesetzeskonforme Lichtverteilung erzeugt.

Diese Aufgabe wird dadurch gelöst, dass die Leuchteinrichtung Folgendes umfasst:
- eine Mehrzahl von in Reihen nebeneinander angeordneter Lichtquellen, welche zur Erzeugung zumindest einer Gesamtlichtverteilung, welche durch überlappen einer Vorfeldlichtverteilung und zumindest einer Teil-Lichtverteilung gebildet ist, vorgesehen sind, wobei die Lichtquellen in zumindest eine erste und eine zweite Gruppe mit je zumindest zwei Lichtquellen angeordnet sind, wobei die zumindest eine erste Gruppe zur Erzeugung der Vorfeldlichtverteilung der zumindest einen Gesamtlichtverteilung vorgesehen ist, und die zumindest eine zweite Gruppe zur Erzeugung der zumindest einen Teil-Lichtverteilung vorgesehen ist,
- wobei der zumindest einen ersten und zweiten Gruppe jeweils eine Ansteuereinheit zugeordnet ist, wobei jede Ansteuereinheit mit den Lichtquellen ihrer Gruppe über Verbindungsleitungen verbunden ist und eingerichtet ist, die Lichtquellen einzeln anzusteuern;
- ein Steuergerät, welches mit den Ansteuereinheiten verbunden ist und eingerichtet ist, Ansteuerdaten zu empfangen und den Ansteuereinheiten zu übermitteln, welche Ansteuereinheiten die Lichtquellen der zumindest einen ersten und zweiten Gruppe in Abhängigkeit der empfangenen Ansteuerdaten ansteuern,
- wobei in den Ansteuereinheiten jeweils eine Notfallansteuerung speicherbar ist, mit welcher Notfallansteuerung eine vorgebbare Ansteuerung der Lichtquellen einer der jeweiligen Ansteuereinheit zugeordneten Gruppe aktiviert wird,
- wobei im Falle eines Verbindungsabbruchs zwischen dem Steuergerät und zumindest einer

Ansteuereinheit die Notfallansteuerung der Ansteuereinheiten aktiviert wird, wobei ausschließlich eine Vorfeldlichtverteilung über die entsprechend dafür vorgesehene Gruppe von Lichtquellen erzeugt wird.

Als Ansteuerdaten sind beispielsweise Zustände von Bedienelementen, beispielsweise Lichtschalter, und/oder Sensoren zu verstehen. Die Ansteuerdaten enthalten Informationen darüber, welche Lichtquellen wie zu bestromen sind hinsichtlich der elektrischen Leistung und/oder des Betriebsmodus, beispielsweise getaktet (Pulsweitenmodulation) oder nicht. Um bei einem möglichen Verbindungsabbruch zwischen dem Steuergerät und zumindest einer Ansteuereinheit eine gesetzeskonforme Lichtverteilung zu ermöglichen, werden gewünschte Lichtverteilungswerte in den Ansteuereinheiten gespeichert, sodass die Ansteuereinheiten bei einem Verbindungsabbruch die ihnen zugeordneten Lichtquellen genau mit diesen Lichtverteilungswerten ansteuern.

Im Allgemeinen lassen sich verschiedene Gesamtlichtverteilungen realisieren. Hinsichtlich unterschiedlicher Verkehrssituationen kann es vorteilhaft sein, wenn die Grundlichtverteilung als eine blendfreie Gesamt-Fernlichtverteilung oder Abblendlichtlichtverteilung ausgebildet ist.

Die zumindest eine erste Gruppe erzeugt hierbei eine Vorfeldlichtverteilung mit einer oberen, horizontalen Begrenzungslinie. Die horizontale Begrenzungslinie oder HD-Linie bildet die Hell-Dunkel-Grenze dieser Vorfeldlichtverteilung, ist in der Gesamtlichtverteilung aber nicht als Hell-Dunkel-Grenze zu erkennen, da sie innerhalb zumindest einer Teil-Lichtverteilung liegt, welche durch die zumindest eine zweite Gruppe von Lichtquellen erzeugbar ist, wobei sich die Vorfeldlichtverteilung und die zumindest eine Teil-Lichtverteilung überlappen und die Gesamtlichtverteilung vor einem Kraftfahrzeugscheinwerfer bzw. Kraftfahrzeug bilden.

Die Begriffe wie "oben", "unten", "vertikal" und "horizontal" in Zusammenhang mit einem Lichtbild bzw. einer Lichtverteilung beziehen sich dabei nicht auf das real auf eine vor einem Kraftfahrzeug liegende Fahrbahn projizierte Lichtbild, sondern auf das auf einem vertikalen Schirm in einer definierten Entfernung (z.B. 10 oder 25 Meter) projizierte Lichtbild und in einem eingebauten Zustand eines Kraftfahrzeugscheinwerfers mit zumindest einer erfindungsgemäßen Leuchteinrichtung.

Die zumindest eine Teil-Lichtverteilung, welche durch die zumindest eine zweite Gruppe erzeugbar ist, kann wiederum eine Hell-Dunkel-Grenze aufweisen, wobei die zumindest eine Teil-Lichtverteilung beispielsweise durch "Dimmen", d.h. durch Absenken der Lichtquellen-Leuchtstärke, ihrer ausgewählten Bereiche die von der zumindest einen ersten Gruppe abgestrahlte Vorfeldlichtverteilung zu unterschiedlichen Gesamtlichtverteilungen vervollständigen.

Die zumindest eine Teil-Lichtverteilung kann beispielsweise die für eine Abblendlichtverteilung typische asymmetrische Hell-Dunkel-Grenze umfassen, so kann beispielweise vorgesehen sein, dass die Vorfeldlichtverteilung eine scharfe horizontale Hell-Dunkel-Grenze aufweist, wobei bereits eine Abblendlichtverteilung erzeugt wird, jedoch ohne den - im Sinne eines Rechtsverkehrs - rechten asymmetrischen Teil einer gesetzeskonformen Abblendlichtverteilung, welcher asymmetrische Teil durch eine Teil-Lichtverteilung in der Gesamtlichtverteilung hinzugefügt werden kann.

Es kann auch vorgesehen sein, dass die Vorfeldlichtverteilung keine scharfe Hell-Dunkel-Grenze aufweist.

Vorteilhafterweise können die Lichtquellen als Leuchtdioden ausgebildet sein.

Es kann günstig sein, wenn jede Leuchtdiode unabhängig von den anderen Leuchtdioden ansteuerbar ist, wobei vorzugsweise die Leuchtdioden unabhängig voneinander dimmbar sind.

Jede Leuchtdiode kann somit unabhängig von den anderen Leuchtdioden ein- und ausgeschaltet werden, und vorzugsweise, wenn es sich um dimmbare Leuchtdioden handelt, auch unabhängig von den anderen Leuchtdioden gedimmt werden.

Es kann vorgesehen sein, dass zur Erzeugung der Vorfeldverteilung zumindest einer Lichtverteilung eine weitere Gruppe von Lichtquellen vorgesehen ist, wobei der weiteren Gruppe eine zusätzliche Ansteuereinheit zugeordnet ist.

Mit Vorteil kann vorgesehen sein, dass die Ansteuereinheiten mit dem Steuergerät verbunden ist, vorzugsweise über einen Bus.

Vorteilhafterweise können die Lichtquellen zur Erzeugung von zumindest zwei Lichtverteilungen vorgesehen sein.

Dabei kann es günstig sein, wenn die Lichtquellen zur Erzeugung von einer Abblendlichtverteilung und einer Fernlichtverteilung vorgesehen sind.

Es kann ferner vorgesehen sein, dass die Ansteuereinheiten als LED Matrix Manager ausgebildet sind.

Diese LED Matrix Manager ermöglichen eine Ansteuerung von LED-Arrays mit großer Helligkeit, wobei bis zu 96 LEDs von einem LMM (LED Matrix Manager) angesteuert werden können, vorzugsweise werden in einer konkreten Ausführungsform 12 LEDs von einem LMM angesteuert.

Ein LMM ermöglicht überdies eine individuelle LED-Helligkeitssteuerung über 10-Bit-PWM für eine pixelgenaue Anpassung der Leuchtstärke einer LED.

Ebenso ermöglicht ein LMM eine Fehlerdiagnose für Unterbrechungen bzw. Kurzschlüsse im LED-Stromkreis, also solche LEDs, die durch den entsprechenden LMM angesteuert werden, wobei Treiber zur Alarmierung bei Ausfall oder Beschädigung des Scheinwerfers vorgesehen sein kann.

Weiters ermöglicht ein LMM-Bauteil aufgrund seiner kompakten Bauweise, dass mehr Platz auf einer Leiterplatte bzw. Ansteuerplatine, auf welcher die LEDs und die zugehörigen LMMs angeordnet sind, zur Verfügung steht. Dadurch können die LEDs in kleineren Gruppierungen mit je einem LMM angeordnet werden bzw. grundsätzlich mehr LEDs verbaut werden.

Es kann vorgesehen sein, dass die Lichtquellen, das Steuergerät und die Ansteuereinheiten auf einer gemeinsamen Leiterplatte bzw. Ansteuerplatine angeordnet sind.

Nachfolgend wird die Erfindung anhand von beispielhaften Zeichnungen näher erläutert. Hierbei zeigt
Fig. 1 eine beispielhafte Anordnung von nebeneinander in Reihen angeordneten Lichtquellen, welche in fünf Gruppen mit je einer zugeordneten Ansteuereinheiten unterteilt sind,
Fig. 2 eine bespielhafte Fernlicht-Gesamtlichtverteilung, welche sich aus einer Vorfeldlichtverteilung und einer Teil-Lichtverteilung zusammensetzt,
Fig. 3 eine beispielhafte Abblendlicht-Gesamtlichtverteilung, welche sich aus einer Vorfeldlichtverteilung und einer Teil-Lichtverteilung zusammensetzt, und
Fig. 4 eine beispielhafte Vorfeldlichtverteilung, welche durch zwei Gruppen von Lichtquellen aus der beispielhaften Anordnung aus Fig. 1 erzeugbar ist.

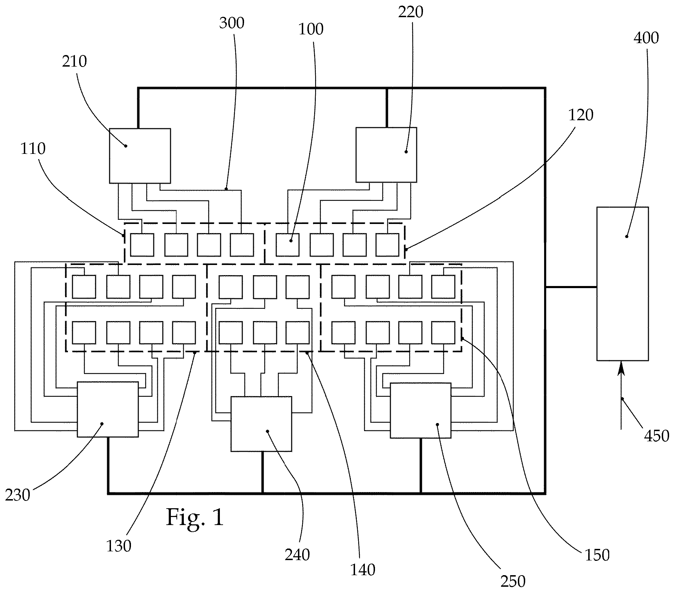

Fig. 1 zeigt einen beispielhaften Aufbau einer Mehrzahl von in Reihen nebeneinander angeordneten Lichtquellen **100** einer Leuchteinrichtung für ein Kraftfahrzeug, welche in diesem Beispiel als Leuchtdioden (LEDs) ausgebildet sind, wobei die Leuchtdioden **100** in fünf Gruppen **110**, **120**, **130**, **140**, **150** mit je zumindest zwei Leuchtdioden **100** angeordnet sind.

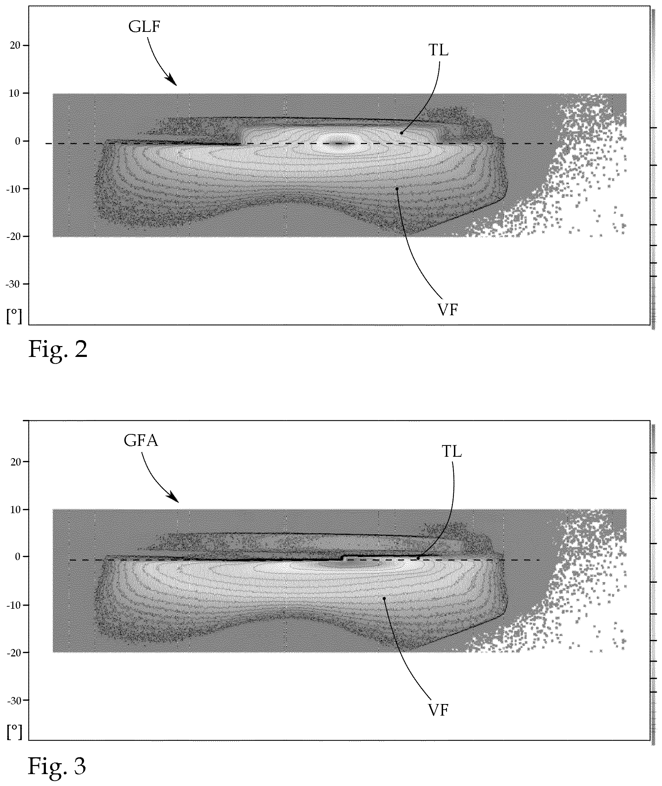

Die Leuchtdioden **100** sind zur Erzeugung zumindest einer Gesamtlichtverteilung **GLF**, **GLA** vorgesehen, welche beispielhaft in den **Figuren 2** und **3** gezeigt ist, wobei die erste Gruppe **110** und die zweite Gruppe **120** der Leuchtdioden **100** zur Erzeugung einer Vorfeldlichtverteilung **VF** der zumindest einen Gesamtlichtverteilung **GLF**, **GLA** vorgesehen sind.

Ferner ist jeder Gruppe **110**, **120**, **130**, **140**, **150** jeweils eine Ansteuereinheit **210**, **220**, **230**, **240**, **250** zugeordnet, welche Ansteuereinheit **210**, **220**, **230**, **240**, **250** jeweils mit den Lichtquellen einer Gruppe **110**, **120**, **130**, **140**, **150** über Verbindungsleitungen **300** verbunden ist und eingerichtet ist, die Leuchtdioden **100** einzeln anzusteuern. In dem gezeigten Beispiel sind die Ansteuereinheiten als LED Matrix Manager ausgebildet.

Die Leuchteinrichtung umfasst weiters ein Steuergerät **400**, welches mit den Ansteuereinheiten **210**, **220**, **230**, **240**, **250** über eine Buskommunikation verbunden ist und eingerichtet ist, Ansteuerdaten **450** zu empfangen und den Ansteuereinheiten **210**, **220**, **230**, **240**, **250** zu übermitteln, welche Ansteuereinheiten **210**, **220**, **230**, **240**, **250** die Leuchtdioden der Gruppen **110**, **120**, **130**, **140**, **150** von Leuchtdioden **100** in Abhängigkeit der empfangenen Ansteuerdaten **450** ansteuern.

Es kann vorgesehen sein, dass die Leuchtdioden **100**, das Steuergerät **400** und die Ansteuereinheiten **210**, **220**, **230**, **240**, **250** auf einer Leiterplatte bzw. Ansteuerplatine angeordnet sind.

Als Ansteuerdaten sind beispielsweise Zustände von Bedienelementen, beispielsweise Lichtschalter, und/oder Sensoren zu verstehen. Die Ansteuerdaten enthalten Informationen darüber, welche Lichtquellen wie zu bestromen sind hinsichtlich der elektrischen Leistung und/oder des Betriebsmodus, beispielsweise getaktet (Pulsweitenmodulation) oder nicht. Im Falle eines Verbindungsabbruchs zwischen dem Steuergerät **400** und zumindest einer

Ansteuereinheit **210**, **220**, **230**, **240**, **250** wird eine Notfallansteuerung der Ansteuereinheiten aktiviert, wobei ausschließlich eine Vorfeldlichtverteilung VF über die entsprechend dafür vorgesehene Gruppe - in diesem Beispiel die erste und die zweite Gruppe **110,120** von Leuchtdioden - erzeugt wird.

Um bei einem möglichen Verbindungsabbruch zwischen dem Steuergerät **400** und zumindest einer Ansteuereinheit **210**, **220**, **230**, **240**, **250** eine gesetzeskonforme Lichtverteilung zu ermöglichen, werden gewünschte Lichtverteilungswerte in den Ansteuereinheiten **210**, **220**, **230**, **240**, **250** gespeichert, sodass die Ansteuereinheiten bei einem Verbindungsabbruch die ihnen zugeordneten Leuchtdioden mit genau diesen Lichtverteilungswerten ansteuern.

Im Falle, dass die Ansteuereinheiten als LMM ausgebildet sind, können entsprechend die in einem LMM vorhandenen SDA (Serial Data) und/oder SCL (Serial Clock) derart gesetzt bzw. geschaltet werden, dass der jeweilige LMM kontinuierlich überprüft, ob die Verbindung zum Steuergerät noch vorhanden ist oder abreist. Sobald eine Verbindung zum Steuergerät nicht mehr vorhanden ist, werden entsprechend die LEDs einer LMM aktiviert bzw. deaktiviert, beispielsweise kann vorgesehen sein, dass bei einem Verbindungsabbruch zum Steuergerät ausschließlich eine Vorfeldlichtverteilung erzeugt wird.

Die erste und die zweite Gruppe **210**, **220** erzeugt hierbei eine Vorfeldlichtverteilung **VF** mit einer oberen, horizontalen Begrenzungslinie. Die horizontale Begrenzungslinie oder HD-Linie bildet die Hell-Dunkel-Grenze dieser Vorfeldlichtverteilung **VF**, ist in einer Gesamtlichtverteilung **GLF**, **GLA** aber nicht als Hell-Dunkel-Grenze nicht immer zu erkennen, da sie innerhalb zumindest einer Teil-Lichtverteilung **TL** liegt, welche durch die übrigen Gruppen **230**, **240**, **250** von Lichtquellen erzeugbar ist, wobei sich die Vorfeldlichtverteilung **VF** und die zumindest eine Teil-Lichtverteilung **TL ü**berlappen und eine Gesamtlichtverteilung **GLF**, **GLA** vor einem Kraftfahrzeugscheinwerfer bzw. Kraftfahrzeug bilden.

Es kann auch vorgesehen sein, dass die Vorfeldlichtverteilung VF keine scharfe Hell-Dunkel-Grenze aufweist.

**Fig. 2** zeigt eine beispielhafte Fernlicht-Gesamtlichtverteilung **GLF**, welche durch die beispielhafte Anordnung aus **Fig. 1** erzeugbar ist und sich aus einer Vorfeldlichtverteilung **VF** und einer Teil-Lichtverteilung **TL** zusammensetzt, wobei die Teil-Lichtverteilung **TL** aus mehreren Lichtverteilungen aufgebaut sein kann.

**Fig. 3** zeigt eine beispielhafte Abblendlicht-Gesamtlichtverteilung **GLA**, welche durch die beispielhafte Anordnung aus **Fig. 1** erzeugbar ist und sich aus einer Vorfeldlichtverteilung **VF** und einer Teil-Lichtverteilung **TL** zusammensetzt, wobei die Teil-Lichtverteilung **TL** aus mehreren Lichtverteilungen aufgebaut sein kann.

Im Allgemeinen lassen sich jedoch verschiedene Gesamtlichtverteilungen realisieren.

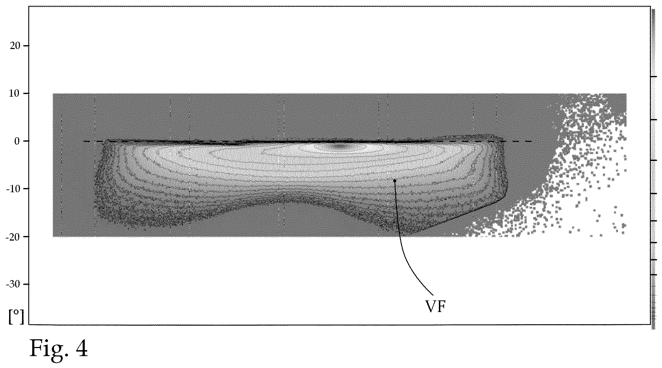

**Fig. 4** zeigt die beispielhafte Vorfeldlichtverteilung **VF** der vorherigen Figuren, wobei keine Teil-Lichtverteilung hinzugefügt ist. Eine solche Vorfeldlichtverteilung wird bei einer Notfallansteuerung der Ansteuereinheiten **210**, **220**, **230**, **240**, **250** erzeugt. Dadurch wird selbst bei einer Fehlfunktion des Steuergerätes **400** eine gesetzeskonforme Lichtverteilung gewährleistet.

**BEZUGSZEICHENLISTE**

| | |
|---|---|
| Lichtquellen | 100 |
| Erste Gruppe | 110 |
| Zweite Gruppe | 120 |
| Dritte Gruppe | 130 |
| Vierte Gruppe | 140 |
| Fünfte Gruppe | 150 |
| Ansteuereinheiten | 210, 220, 230, 240, 250 |
| Verbindungsleitungen | 300 |
| Steuergerät | 400 |
| Ansteuerdaten | 450 |
| Vorfeldlichtverteilung | VF |
| Teil-Lichtverteilung | TL |
| Gesamtlichtverteilung | GLF, GLA |

## Patentansprüche

1. Leuchteinrichtung für einen Kraftfahrzeugscheinwerfer, welche Leuchteinrichtung Folgendes umfasst:
- eine Mehrzahl von in Reihen nebeneinander angeordneter Lichtquellen (100), welche zur Erzeugung zumindest einer Gesamtlichtverteilung (GLF, GLA), welche durch überlappen einer Vorfeldlichtverteilung (VF) und zumindest einer Teil-Lichtverteilung (TL) gebildet ist, vorgesehen sind, wobei die Lichtquellen (100) in zumindest eine erste und eine zweite Gruppe (110, 130) mit je zumindest zwei Lichtquellen angeordnet sind, wobei die zumindest eine erste Gruppe (110) zur Erzeugung der Vorfeldlichtverteilung (VF) der zumindest einen Gesamtlichtverteilung (GLF, GLA) vorgesehen ist, und die zumindest eine zweite Gruppe (130) zur Erzeugung der zumindest einen Teil-Lichtverteilung (TL) vorgesehen ist,
- wobei der zumindest einen ersten und zweiten Gruppe (110, 130) jeweils eine Ansteuereinheit (210, 220) zugeordnet ist, wobei jede Ansteuereinheit (210, 230) mit den Lichtquellen ihrer Gruppe (110, 130) über Verbindungsleitungen (300) verbunden ist und eingerichtet ist, die Lichtquellen (100) einzeln anzusteuern;
- ein Steuergerät (400), welches mit den Ansteuereinheiten (210, 230) verbunden ist und eingerichtet ist, Ansteuerdaten (450) zu empfangen und den Ansteuereinheiten (210, 230) zu übermitteln, welche Ansteuereinheiten die Lichtquellen der zumindest einen ersten und zweiten Gruppe (110, 130) in Abhängigkeit der empfangenen Ansteuerdaten (450) ansteuern,
- wobei in den Ansteuereinheiten (210, 230) jeweils eine Notfallansteuerung speicherbar ist, mit welcher Notfallansteuerung eine vorgebbare Ansteuerung der Lichtquellen einer der jeweiligen Ansteuereinheit zugeordneten Gruppe aktiviert wird,
- wobei im Falle eines Verbindungsabbruchs zwischen dem Steuergerät (400) und zumindest einer Ansteuereinheit (210, 230) die Notfallansteuerung der Ansteuereinheiten aktiviert wird, wobei ausschließlich eine Vorfeldlichtverteilung (VF) über die entsprechend dafür vorgesehene Gruppe von Lichtquellen erzeugt wird.

2. Leuchteinrichtung nach Anspruch 1, **dadurch gekennzeichnet, dass** die Lichtquellen (100) als Leuchtdioden ausgebildet sind.

3. Leuchteinrichtung nach Anspruch 1 oder 2, **dadurch gekennzeichnet, dass** jede Leuchtdiode unabhängig von den anderen Leuchtdioden ansteuerbar ist, wobei vorzugsweise die Leuchtdioden unabhängig voneinander dimmbar sind.

4. Leuchteinrichtung nach einem der Ansprüche 1 bis 3, **dadurch gekennzeichnet, dass** zur Erzeugung der Vorfeldverteilung zumindest einer Lichtverteilung eine weitere Gruppe (120) von Lichtquellen vorgesehen ist, wobei der weiteren Gruppe (120) eine zusätzliche Ansteuereinheit (220) zugeordnet ist.

5. Leuchteinrichtung nach einem der Ansprüche 1 bis 4, **dadurch gekennzeichnet, dass** die Ansteuereinheiten (210, 220, 230) mit dem Steuergerät (400) verbunden sind, vorzugsweise über einen Bus.

6. Leuchteinrichtung nach einem der Ansprüche 1 bis 5, **dadurch gekennzeichnet, dass** die Lichtquellen (100) zur Erzeugung von zumindest zwei Lichtverteilungen vorgesehen sind.

7. Leuchteinrichtung nach Anspruch 6, **dadurch gekennzeichnet, dass** die Lichtquellen (100) zur Erzeugung von einer Abblendlichtverteilung und einer Fernlichtverteilung vorgesehen sind.

8. Leuchteinrichtung nach einem der Ansprüche 1 bis 7, **dadurch gekennzeichnet, dass** die Ansteuereinheiten (210, 220, 230) als LED Matrix Manager ausgebildet sind.

9. Kraftfahrzeugscheinwerfer mit zumindest einer Leuchteinrichtung gemäß einem der Ansprüche 1 bis 8.

## Claims

1. Lighting device for a motor vehicle headlamp, which lighting device comprises the following:
- a plurality of light sources (100) arranged in rows next to one another, which are provided for generating at least one overall light distribution (GLF, GLA), which is formed by overlapping an apron light distribution (VF) and at least one partial light distribution (TL), the light sources (100) being divided into at least one first and one second group (110, 130) each having at least two light sources, the at least one first group (110) being provided for generating the apron light distribution (VF) of the at least one overall light distribution (GLF, GLA), and the at least one second group (130) being provided for generating the at least one partial light distribution (TL),
- the at least one first and second group (110, 130) each being assigned a drive unit (210, 220), each drive unit (210, 230) being connected to the light sources of its group (110, 130) via connecting lines (300) and being set up to drive the light sources (100) individually
- a control unit (400) which is connected to the drive units (210, 230) and is arranged to receive drive data (450) and to transmit to the drive units (210, 230) which drive units drive the light sources of the at least one first and second group (110, 130) as a function of the received drive data (450),
- wherein an emergency control can be stored in each of the control units (210, 230), with which emergency control a predeterminable control of the light sources of a group assigned to the respective control unit is activated,
- wherein, in the event of a loss of connection between the control unit (400) and at least one drive unit (210, 230), the emergency control of the drive units is activated, wherein exclusively an apron light distribution (VF) is generated via the group of light sources correspondingly provided therefor.

2. Lighting device according to claim 1, **characterized in that** the light sources (100) are designed as light-emitting diodes.

3. Lighting device according to claim 1 or 2, **characterized in that** each light emitting diode can be controlled independently of the other light emitting diodes, preferably the light emitting diodes being dimmable independently of one another.

4. Lighting device according to one of claims 1 to 3, **characterized in that** a further group (120) of light sources is provided for generating the apron distribution of at least one light distribution, the further group (120) being assigned an additional drive unit (220).

5. Lighting device according to one of claims 1 to 4, **characterized in that** the control units (210, 220, 230) are connected to the control unit (400), preferably via a bus.

6. Lighting device according to one of claims 1 to 5, **characterized in that** the light sources (100) are provided for generating at least two light distributions.

7. Lighting device according to claim 6, **characterized in that** the light sources (100) are provided for generating a low beam distribution and a high beam distribution.

8. Lighting device according to one of claims 1 to 7, **characterized in that** the drive units (210, 220, 230) are designed as LED matrix managers.

9. Motor vehicle headlamp having at least one lighting device according to one of claims 1 to 8.

## Revendications

1. Dispositif d'éclairage pour un projecteur de véhicule automobile, lequel dispositif d'éclairage comprend ce qui suit :
- une pluralité de sources lumineuses (100) disposées en rangées les unes à côté des autres, qui sont prévues pour produire au moins une répartition globale de la lumière (GLF, GLA), qui est formée par le chevauchement d'une répartition de la lumière en amont (VF) et d'au moins une répartition partielle de la lumière (TL), les sources lumineuses (100) étant réparties en au moins un premier et un deuxième groupe (110, 130) comprenant chacun au moins deux sources lumineuses, l'au moins un premier groupe (110) étant prévu pour générer la répartition de lumière en amont (VF) de l'au moins une répartition de lumière globale (GLF, GLA), et l'au moins un deuxième groupe (130) étant prévu pour générer l'au moins une répartition de lumière partielle (TL),
- une unité de commande (210, 220) étant respectivement associée à l'au moins un premier et un deuxième groupe (110, 130), chaque unité de commande (210, 230) étant reliée aux sources lumineuses de son groupe (110, 130) par des lignes de liaison (300) et étant conçue pour commander individuellement les sources lumineuses (100) ;
- un appareil de commande (400) qui est relié aux unités de commande (210, 230) et qui est conçu pour recevoir des données de commande (450) et pour transmettre aux unités de commande (210, 230), lesquelles unités de commande commandent les sources lumineuses d'au moins un premier et un deuxième groupe (110, 130) en fonction des données de commande (450) reçues,
- une commande d'urgence pouvant être mémorisée dans chacune des unités de commande (210, 230), commande d'urgence avec laquelle une commande prédéfinissable des sources lumineuses d'un groupe associé à l'unité de commande respective est activée,
- dans lequel, en cas de rupture de liaison entre l'appareil de commande (400) et au moins une unité de commande (210, 230), la commande de secours des unités de commande est activée, une répartition de la lumière en amont (VF) étant exclusivement générée par le groupe de sources lumineuses prévu à cet effet.

2. Dispositif d'éclairage selon la revendication 1, **caractérisé en ce que** les sources lumineuses (100) sont des diodes électroluminescentes.

3. Dispositif d'éclairage selon la revendication 1 ou 2, **caractérisé en ce que** chaque diode électroluminescente peut être commandée indépendamment des autres diodes électroluminescentes, les diodes électroluminescentes pouvant de préférence être graduées indépendamment les unes des autres.

4. Dispositif d'éclairage selon l'une des revendications 1 à 3, **caractérisé en ce qu'**un autre groupe (120) de sources lumineuses est prévu pour générer la répartition en amont d'au moins une répartition lumineuse, une unité de commande supplémentaire (220) étant associée à l'autre groupe (120).

5. Dispositif d'éclairage selon l'une des revendications 1 à 4, **caractérisé en ce que** les unités de commande (210, 220, 230) sont reliées à l'appareil de commande (400), de préférence par un bus.

6. Dispositif d'éclairage selon l'une des revendications 1 à 5, **caractérisé en ce que** les sources lumineuses (100) sont prévues pour générer au moins deux répartitions de lumière.

7. Dispositif d'éclairage selon la revendication 6, **caractérisé en ce que** les sources lumineuses (100) sont prévues pour produire une répartition des feux de croisement et une répartition des feux de route.

8. Dispositif d'éclairage selon l'une des revendications 1 à 7, **caractérisé en ce que** les unités de commande (210, 220, 230) sont conçues comme des gestionnaires de matrice de LED.

9. Projecteur de véhicule automobile comportant au moins un dispositif lumineux selon l'une des revendications 1 à 8.
